# EUROPEAN PATENT APPLICATION

(11) **EP 3 629 345 A1**
(43) Date of publication of application: **01.04.2020**
(21) Application number: 18196750.6
(22) Date of filing: 26.09.2018
(51) Int. Cl.: H01B 3/46, H01B 7/18, H01B 7/285

(54) **CABLE**

(71) Applicant: Lapp Engineering & Co., 6330 Cham (CH)
(72) Inventor: Sterli, Luigi, 6330 Cham (CH); Riva, Stefano, 6330 Cham (CH); Lunari, Giancarlo, 6330 Cham (CH); Mishra, Prakash, 6330 Cham (CH)

(57) **Abstract**

The invention relates to a cable (10) for explosive atmospheres comprising:
at least two conductors (1);
at least two conductor insulation layers (2) each enclosing one of said conductors (1);
an outer jacket (4) enclosing said conductors (1) and said conductor insulation layers (2);
a filling layer (3) filling the space and gaps between the conductor insulation layers (2) and the outer jacket (4) and
other interstices within the cable (10). According to the invention, the filling layer (3) is filling the space, gaps and interstices between the conductor insulation layers (2) and the outer jacket (4) such that a cable (10) with a length of 0.5m to one end of which an overpressure of 0.3kPa is applied by a sealed enclosure of 5litres will allow for the overpressure to be reduced by diffusion along the interior of the cable by less than 0.15kPa in 5 seconds.

## Description

The present invention relates to a cable for explosive atmospheres and a method for producing such a cable.

Electrical and optical Cables are used in a large variety of technological applications. Cables suited for a given application must be designed in a way to withstand the environment and conditions typically encountered in these situations.

In hazardous environments where explosive atmospheres are encountered, cables must be designed in a way to prevent ignition of explosive gases and fluids. EP3054457A1 discloses a cable for explosive atmospheres. Explosive gases contained in the explosive atmosphere can diffuse along interstices within the cable and reach areas outside the hazardous environment. This increases the risk of explosion outside the hazardous environment.

The problem of the present invention is to provide a cable which limits the risks encountered in environments with explosive atmospheres.

Further, the cable shall be easy to manufacture.

Additionally, the cable shall limit the risk of explosive gases and fluids being transported out of the contained hazardous environment.

More particularly, the cable shall meet the requirements of IEC 60079-14 for explosive atmospheres.

The problem is solved by a cable for explosive atmospheres according to claim 1 and a method for producing a cable for explosive atmospheres according to claim 12. Further preferred embodiments are subject of the dependent claims.

The cable for explosive atmospheres of the present invention comprises at least two conductors. The conductors are preferably made from stranded copper and/or aluminium wires or a conductive polymer or a superconductor or a carbon steel conductor or a metal alloy. Each conductor is enclosed by and electrically insulated by a conductor insulation layer. The insulated conductors are enclosed within an outer jacket which protects the cable against external mechanical and chemical influences. A filling layer is filling out all the space and gaps between the conductor insulation layers and the outer jacket as well as other interstices within the cable.

According to the present invention, the filling layer is filling the space, gaps and interstices between the conductor insulation layers and the outer jacket such that fluids or gases cannot diffuse along the cable axis in large quantities. Large quantities is for the purpose of the present invention defined as a follows: A piece of a cable according to the invention of a length of 0.5m is hermetically sealed into an enclosure of a volume of 5 litres. One end of the cable being within the enclosure, the other end being outside of the enclosure. The cable is considered to not allow for large quantities of fluids or gases if the time interval for an internal overpressure within the enclosure of 30kPa to drop to 15kPa is not less than 5 seconds. Such a cable will only allow small quantities of gases and fluids to diffuse outside an enclosure with an explosive atmosphere such that the risk of explosions due to large quantities of gases or fluids leaving the enclosure is reduced.

In a preferred embodiment, the cable fulfils the requirements of IEC 60079-14. This makes the cable suitable for applications in explosive environments.

In a further preferred embodiment of the present invention, the cable comprises one or several cores, pairs or triads of conductors, each of which is insulated by a conductor insulation layer, which are grouped together by a conductor grouping layer. This allows for the construction of data, control or signal cables. The space and gaps between the conductor grouping layer and the conductor insulation layers are filled by a second filling layer.

According to another aspect of the present invention, the second filling layer is filling the space, gaps and interstices between the grouping layer and the conductor insulation layers such that fluids or gases cannot diffuse along the cable axis in large quantities.

In a preferred embodiment, the outer jacket is made from a material comprising an antistatic additive. This reduced the risk of explosions initiated through a static discharge. Preferably, the outer jacket is made from a material which reduces diffusion of gases and fluids through the outer jacket to the inside of the cable. This further reduces diffusion of fluids and gases along the interior of the cable.

In a particularly preferred embodiment, the cable further comprises an armour layer and/or an electromagnetic shielding layer and/or at least one tape layer wrapped around one or several conductors.

In a further preferred embodiment of the present invention, the outer jacket is made from a material comprising polyvinylchloride, polyolefin, polyethylene or polyurethane and/or the conductor insulation layer is made from a material comprising polyolefin, polyvinylchloride or polyurethane.

According to another embodiment of the present invention, the cable comprises at least one optical conductor.

In a further particularly preferred embodiment, the filling layer and/or the second filling layer are made from a bicomponent silicone compound material.

In a further preferred embodiment, different silicone compounds are used for the filling layer and the second filling layer.

In other embodiments of the present invention, strength layers (e.g. made from an aramid braid) and/or electric screening layer (e.g. made from an electrically conductive braid from conducting wires) are positioned between any of the other layers of the cable.

A cable for explosive atmospheres according to the present invention is produced by a method which is also part of the invention. A cable according to the present invention is produced in a way that the filling layer and/or the second filling layer are applied during the twisting of pairs/triads of insulated conductors or during the assembling of cores/pairs/triads of insulated conductors. This allows for a fast production of the cable.

The present invention will be further described by way of example only, with reference to the accompanying drawings, wherein:
- Fig. 1: Schematically depicts a cross-sectional view of a cable 10 for explosive atmospheres in accordance with a first embodiment of the present invention;
- Fig. 2: Schematically depicts a cross-sectional view of a cable 10 for explosive atmospheres according to a second embodiment of the present invention;

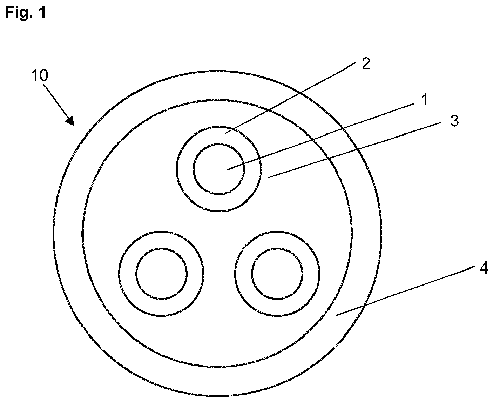

Figure 1 schematically shows a cross-sectional view of a cable 10 for explosive atmospheres in accordance with a first embodiment of the present invention. Three conductors 1 are each electrically insulated by a conductor insulation layer 2 and surrounded by a filling layer 3. The filling layer 3 covers all the space between the insulated conductors and the outer jacket 4 of the cable 10.

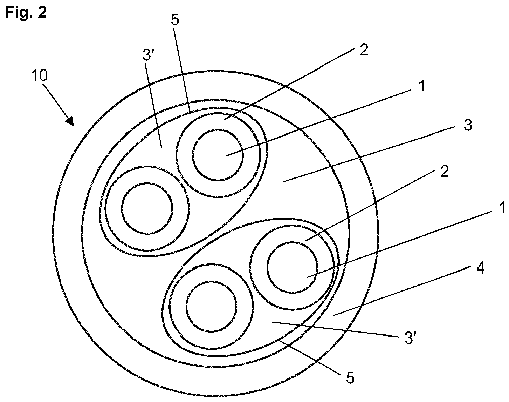

Figure 2 schematically shows a cross-sectional view of a cable 10 for explosive atmospheres according to a second embodiment of the present invention. Two pairs of conductors 1, each of which is electrically insulated by a conductor insulation layer 2, are embedded in a filling layer 3 around which the outer jacket 4 of the cable 10 is formed. Each pair of conductors 1 is grouped together by a conductor grouping layer 5. The space between the conductor grouping layer 5 and the conductor insulation layers 2 of the conductors 1 is completely filled by a second filling layer 3'.

### List of reference signs

- 1: Conductor
- 2: Conductor insulation layer
- 3: Filling layer
- 3': Second filling layer
- 4: Outer jacket
- 5: Conductor grouping layer
- 10: Cable

## Claims

1. A cable (10) for explosive atmospheres comprising:
at least two conductors (1);
at least two conductor insulation layers (2) each enclosing one of said conductors (1);
an outer jacket (4) enclosing said conductors (1) and said conductor insulation layers (2);
a filling layer (3) filling the space and gaps between the conductor insulation layers (2) and the outer jacket (4) and other interstices within the cable (10);
**characterized in that** the filling layer (3) is filling the space, gaps and interstices between the conductor insulation layers (2) and the outer jacket (4) such that a cable (10) with a length of 0.5m to one end of which an overpressure of 0.3kPa is applied by a sealed enclosure of 5litres will allow for the overpressure to be reduced by diffusion along the interior of the cable by less than 0.15kPa in 5 seconds.

2. A cable (10) for explosive atmospheres according to claim 1, wherein the cable (10) fulfils the requirements of IEC 60079-14.

3. A cable (10) for explosive atmospheres according to claim 1 or 2, wherein the cable (10) comprises one or several cores or pairs or triads of conductors (1) each of which is insulated by a conductor insulation layer (2) which are grouped together by conductor grouping layers (5).

4. A cable (10) for explosive atmospheres according to claim 3, wherein the space and gaps between the conductor grouping layer (5) and the conductor insulation layers (2) are filled by a second filling layer (3').

5. A cable (10) for explosive atmospheres according one or more of the preceding claims, wherein the second filling layer (3') is filling the space, gaps and interstices between the grouping layer (5) and the conductor insulation layers (2) such that a cable (10) with a length of 0.5m to one end of which an overpressure of 0.3kPa is applied by a sealed enclosure of 5litres will allow for the overpressure to be reduced by diffusion along the interior of the cable by less than 0.15kPa in 5 seconds.

6. A cable (10) for explosive atmospheres according one or more of the preceding claims, wherein the outer jacket (4) is made from a material comprising an antistatic additive and/or that the outer jacket (4) is made from a material which reduces diffusion of gases and fluids through the outer jacket (4) to the inside of the cable (10).

7. A cable (10) for explosive atmospheres according one or more of the preceding claims, wherein the cable (10) further comprises an armour layer and/or an electromagnetic shielding layer and/or at least one tape layer wrapped around one or several conductors (2).

8. A cable (10) for explosive atmospheres according one or more of the preceding claims, wherein the outer jacket (4) is made from a material comprising polyvinylchloride, polyolefin, polyethylene or polyurethane and/or the conductor insulation layer (2) is made from a material comprising polyolefin, polyvinylchloride or polyurethane.

9. A cable (10) for explosive atmospheres according one or more of the preceding claims, wherein the cable (10) comprises at least one optical conductor.

10. A cable (10) for explosive atmospheres according to one or more of the preceding claims, wherein the filling layer (3) and/or the second filling layer (3') are made from a bicomponent silicone compound material.

11. A cable (10) for explosive atmospheres according to claim 10, wherein different silicone compounds are used for the filling layer (3) and the second filling layer (3').

12. A method for producing a cable (10) for explosive atmospheres according to one or more of the preceding claims, where the filling layer (3) and/or the second filling layer (3') are applied during the twisting of pairs/triads of insulated conductors or during the assembling of pairs/triads of insulated conductors.
